# EUROPÄISCHE PATENTSCHRIFT

(11) **EP 3 387 857 B1**
(45) Veröffentlichungstag und Bekanntmachung des Hinweises auf die Patenterteilung: **17.11.2021**
(21) Anmeldenummer: 16819013.0
(22) Anmeldetag: 08.12.2016
(51) Int. Cl.: H04W 24/10

(54) **VORRICHTUNG ZUR ERZEUGUNG EINER DATENBASIS**
DEVICE FOR GENERATING A DATABASE
DISPOSITIF DE GÉNÉRATION D'UNE BASE DE DONNEES

(30) Priorität: 10.12.2015 DE 102015121488
(43) Veröffentlichungstag der Anmeldung: 17.10.2018
(73) Patentinhaber: VestiFi GmbH, 18146 Rostock (DE)
(72) Erfinder: WOLLENBERG, Till, 18055 Rostock (DE)
(74) Vertreter: Müller Verweyen
(86) Internationale Anmeldenummer: PCT/EP2016/080299
(87) Internationale Veröffentlichungsnummer: WO 2017/097922

(56) Entgegenhaltungen:
- WO-A1-2009/141106
- WO-A1-2015/044467
- US-A1- 2005 128 989
- US-A1- 2006 023 638
- US-A1- 2007 180 106
- US-B1- 9 078 153
- JIA-YU PAN ET AL: "FastCARS: fast, correlation-aware sampling for network data mining", GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002; [IEEE GLOBAL TELECOMMUNICATIONS CONFERENCE], NEW YORK, NY : IEEE, US, vol. 3, 17 November 2002 (2002-11-17), pages 2155-2159, XP010636130, DOI: 10.1109/GLOCOM.2002.1189013 ISBN: 978-0-7803-7632-8

## Beschreibung

Die vorliegende Erfindung ist mit einer Vorrichtung zur Erzeugung einer Datenbasis befasst. Die Datenbasis ist für eine Identifikation von Problemen in einem drahtlosen Netzwerk geeignet.

### Technischer Hintergrund

Im Unternehmensumfeld sind Wireless local area networks (WLAN) beziehungsweise andere funkbasierte Netzwerke in vielen Branchen heute allgegenwärtig. Während allerdings noch vor wenigen Jahren unkritische Einsatzbereiche wie zum Beispiel "Internetzugang für Besucher" überwogen, wird der drahtlose Netzzugang heute zunehmend auch in kritischeren Bereichen eingesetzt. In modernen Büroformen ohne fest zugeordnete Arbeitsplätze erfolgt die Einbindung von Arbeitsgeräten in das Firmennetz in der Regel z.B. über WLAN. Dies gilt auch für schnurlose IP-Telefone (Voice-over-IP) und mobile Datenerfassungsgeräte (zum Beispiel Barcodescanner). Einige Geräte wie zum Beispiel besonders kompakte Notebooks oder Tablet-PCs weisen keine kabelgebundene Netzwerkschnittstelle mehr auf.

Fehler im WLAN-Netzbetrieb sind im Geschäftsbetrieb nicht nur ärgerlich sondern stören den Geschäftsbetrieb und führen so regelmäßig zu realen Kosten. Die Ursachen der Fehler müssen daher schnell gefunden und kurzfristig behoben werden.

Störungen oder Probleme treten oft nur lokal auf (zum Beispiel schlechte Funkversorgung, lokal wirksame Störquelle, Raum mit sehr vielen gleichzeitig aktiven WLAN-Geräten). Eine Diagnose solcher Probleme erfordert daher i. d. R. eine Messung an eben dem Ort, an dem die Probleme auftreten. Die Ursachen sind genau wie die Fehlerbilder vielfältig: Mögliche Ursachen sind zum Beispiel Konfigurationsfehler in Endgeräten und/oder in der Infrastruktur, Hardwareprobleme, Softwarefehler, falsche Planung, Überlastung des Netzes, Einsatz nicht erlaubter WLAN-Geräte, Störungen durch benachbarte WLAN-Systeme, durch andere Funkdienste im selben Frequenzbereich und/oder durch Störabstrahlung von Maschinen und Geräten.

Viele Fehler in der WLAN-Versorgung treten zumeist nicht permanent, sondern nur zeitweilig oder sporadisch auf. Zudem lassen sich die Probleme oft nicht verlässlich reproduzieren. Ferner ist es für die Erkennung von Zusammenhängen in aller Regel hilfreich, größere Zeitbereiche zu betrachten.

Je nach Messmethode und Intensität der WLAN-Nutzung entstehen bei der Messung umfangreiche Daten. Um über längere Zeiträume (zum Beispiel mehrere Tage) oder dauerhaft messen zu können, wird dann eine Datenverbindung benötigt, über die die Messdaten während der Messung abtransportiert werden können. In diesem Fall ist zum Beispiel ein zentraler Server nötig, der die Messdaten aufnimmt.

Die Abhängigkeit der Messung von der Verfügbarkeit eines kabelgebundenen Netzwerkanschlusses schränkt die Wahl des Messstandortes ein und ist in bestimmten Situationen (zum Beispiel abgeschlossene Bereiche, bewegliche Maschinen etc.) generell nicht möglich. Eine Anbindung des Messgerätes per Funk ist problematisch, weil diese Einfluss auf die Messung hat, und zudem Bereiche mit unzureichender Funk-Netzabdeckung gerade häufiger Gegenstand einer Messung sind.

US 2005/0128989 A1 beschreit ein Verfahren und System zur Überwachung einer ausgewählten Region eines Luftraums, der mit einem lokalen Bereichsnetzwerk von Computervorrichtungen assoziiert ist. US 2007/0180106 A1 befasst sich mit Performanzvörhersage von Media Streams über kabellose Netzwerke und lehrt, durch Übertragung eingeführte Artefakte durch Vergleich eines unkomprimiert übertragenen benchmark workloads mit einer komprimiert übertragenen Version des benchmark workloads zu bestimmen und zu identifizieren. PAN, J.-Y.: "FASTCARS: fast, correlation-aware sampling for network data mining", In: Research Showcase @ CMU, pp. 1-25, 2002, beschreibt das Erfassen von Korrelation zwischen aufeinanderfolgenden und beabstandeten Paketen zur Verkehrsstichprobenentnahme. Weiterer Stand der Technik ist in US 2007/0088981 A1, US 2005/0227625 A1, US 2006/0023638 A1 und US 2010/0296496 A1 beschrieben.

WO 2009/141106 A1 offenbart eine Vorrichtung zum Verarbeiten von Datenpaketen eines Datenstroms.

US 2005/128989 A1 offenbart eine mit einem LAN-Netzwerk verbundene Spürvorrichtung zum Aufspüren von unbefugten Benutzern und zum Schutz des WLAN-Netzwerks vor unbefugten Benutzern.

### Erfindung

Erfindungsgemäß wird eine Vorrichtung nach Anspruch 1 vorgeschlagen, die zur Erzeugung einer für eine Identifikation Problemen in einem drahtlosen Netzwerk, beispielsweise nur zeitweilig, sporadisch und/oder nicht reproduzierbar auftretende Probleme, geeigneten Datenbasis ausgebildet ist. Vorteilhafte Ausführungsformen der erfindungsgemäßen Vorrichtung sind in den abhängigen Ansprüchen spezifiziert.

Eine Steuereinheit ist ausgebildet, autark, also automatisiert und dynamisch-adaptiv, von der Empfangseinheit (EE) empfangene Datenpakete zur Speicherung in der Datenbasis auszuwählen. Dies ermöglicht intelligente Speicherung relevanter Datenpakete, damit Speicherung von Daten aus deutlich längeren Zeiträumen und somit eine erhöhte Wahrscheinlichkeit, dass Probleme, die nur zeitweilig, sporadisch und/oder nicht reproduzierbar auftreten, anhand der gespeicherten Daten identifiziert, diagnostiziert und/oder lokalisiert werden können.

Das vorgeschlagene Verfahren erlaubt auch unerfahrenen Nutzern kostengünstig eine Datenbasis zur Identifikation von Problemen in einem drahtlosen Netzwerk zu gewinnen.

### Figurenbeschreibung

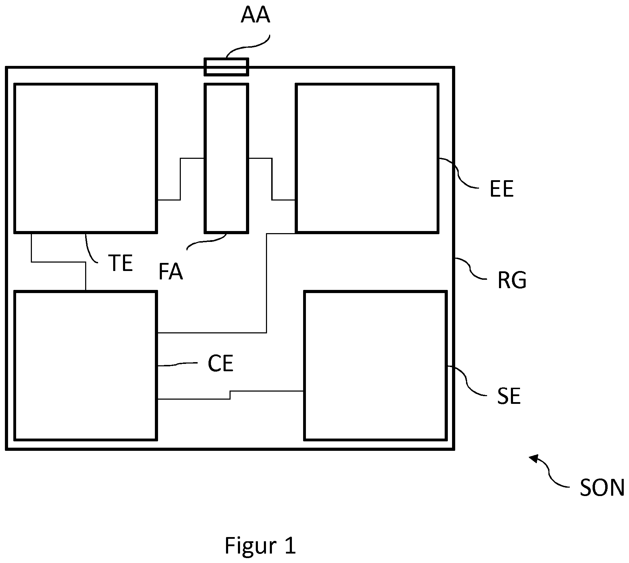

- Figur 1: zeigt eine beispielhafte Ausführungsform der Erfindung.

### Ausführungsformen

Figur 1 zeigt eine beispielhafte Ausführungsform der Erfindung.

In der dargestellten beispielhaften Ausführungsform umfasst die Vorrichtung SON mindestens eine Empfangseinheit EE zum Empfang von Datenpaketen über einen Funkkanal des drahtlosen Netzwerks und eine Speichereinheit SE zur Speicherung von Daten aus empfangenen Datenpaketen.

Bei den gespeicherten Daten kann es sich insbesondere um Daten aus einer oder mehreren Schichten unter einer Medienzugriffssteuerungsschicht (MAC layer, englisch für Media Access Control layer) beziehungsweise einer logischen Verknüpfungskontrollschicht (LLC layer, englisch für Logic Link Control layer) handeln. Beispielsweise werden Daten aus der Bitübertragungsschicht gespeichert. Beispielsweise werden Daten zu Signalpegel, Modulationsverfahren und/oder Bandbreite gespeichert.

Weiterhin umfasst die Vorrichtung eine Steuereinheit CE, die ausgebildet ist, lediglich in den empfangen Datenpaketen enthaltene Steuerdaten in der Speichereinheit SE zu speichern. Dabei wird von Steuerdaten eines nachfolgend empfangenen Datenpakets lediglich ein mit Steuerdaten eines vorangehend empfangen Datenpakets nicht korrelierter Teil gespeichert.

Beispielsweise wird bei regelmäßig wiederholten Steuernachrichten nur der jeweils veränderliche Teil gespeichert.

Auch können sowohl in Nutz- als auch Steuerdaten Elemente weggelassen werden, die für die Auswertung nicht relevant sind. Eine Entropiekodierung über alle aufgezeichneten Daten ist auch möglich. Schon vor der Aufzeichnung können für die Auswertung eines Zielnetzes weniger relevante Daten verworfen werden. Dazu können Aussendungen anderer Netze zählen oder Aussendungen von Clients, die sich nicht zum Zielnetz verbinden. In einigen beispielhaften Ausführungsformen werden jedoch Meta-Informationen aus den weniger relevanten Datenpaketen behalten, etwa wenn eine Aussendungen auf einem Kanal zu einem Zeitpunkt den Kanal für eine Zeitdauer belegt, auch wenn die Aussendung nicht durch das Zielnetz erfolgte, oder nicht dazu diente, sich mit dem Zielnetz zu verbinden.

Die Vorrichtung SON ist in beispielhaften Ausführungsformen der Erfindung konfiguriert, Entscheidungen autark, also automatisiert und dynamisch-adaptiv, zu treffen. Die Vorrichtung SON kann beispielsweise ausgebildet sein, Relevanz von Clients zu lernen, je nach dem, ob und wie häufig sie sich mit dem Zielnetz verbinden, und/oder, ob ein Problem korreliert mit Aktivitäten des Clients auftritt.

Die Steuereinheit CE des dargestellten Ausführungsbeispiels ist ausgebildet, über die Empfangseinheit EE empfangene Datenpakete dynamisch zur Speicherung in der Speichereinheit SE als Teil einer Datenbasis zur Identifikation von Netzwerkproblemen auszuwählen. Dabei trägt die Dynamik beispielsweise einer Funkkanalauslastung, einer zu untersuchenden Störung und/oder einer verfügbaren Datenspeicherkapazität Rechnung.

Die Steuereinheit CE des dargestellten Ausführungsbeispiels ist auch ausgebildet, die Empfangseinheit EE so anzusteuern, dass diese in zeitlicher Folge Datenpakete über die mindestens zwei Funkkanäle empfängt, um so mehr als einen Funkkanal überwachen zu können, ohne eine entsprechende Anzahl Empfangseinheiten vorhalten zu müssen. Dabei steuert die Steuereinheit CE die Empfangseinheit EE dynamisch zum Kanalwechseln an, wobei die Dynamik beispielsweise einer Auslastung der Funkkanäle, einer zu untersuchenden Störung und/oder einer verfügbaren Datenspeicherkapazität Rechnung trägt.

In einer beispielhaften Ausführungsform wechselt die Empfangseinheit EE anfangs nach einem vorbestimmten Initialmuster von Kanal zu Kanal mit gleicher Verweildauer auf jedem Kanal. Im Rahmen des Initialmusters beobachtete Häufigkeit und/oder Art von Nutzung, Auslastung und/oder Störung bewirkt eine Veränderung des Musters, so dass eine Verbesserung der Messdatenqualität gegenüber dem Initialmuster [entsteht / resultiert].

Beispielsweise können anfänglich, bei völlig unbekannter Situation, zunächst alle technisch möglichen Kanäle gleich oft beobachtet werden. Die dabei gewonnenen Daten werden noch in der Sonde automatisiert ausgewertet. Im Ergebnis werden dann Kanäle häufiger/länger beobachtet, die zum Beispiel stark ausgelastet sind, von viele Basisstationen genutzt werden, von vielen Clients genutzt werden, viele Störungen bzw. Probleme aufweisen, die von relevanten Netzwerken verwendet werden (z.B. über vorkonfigurierte Namen der Kundennetze oder vorkonfigurierte Geräteadressen bekannter Kundengeräte) oder die von Geräten in örtlicher nähe zum Messgerät benutzt werden. Da sich die Messsituation (auch: Messposition) im Laufe der Messung verändern kann, müssen bei Anpassung der Messparameter diese laufend kontrolliert und ggf. wiederholt angepasst werden.

Die Steuereinheit CE des dargestellten Ausführungsbeispiels ist ausgebildet, die Empfangseinheit EE so anzusteuern, dass eine Anzahl Datenpakete, die über einen jeweiligen der Kanäle empfangen wird, proportional zu einer Auslastung des jeweiligen Kanals ist.

Die dargestellte Vorrichtung SON umfasst weiterhin eine Sendeeinheit TE zum Senden von Testdatenpaketen über den einen Funkkanal des drahtlosen Netzwerks, die Sendeeinheit ist jedoch optional. Um beispielsweise eine Qualität des Funknetzwerks und/oder Parameter zu messen, die sich aktuell oder grundsätzlich nicht durch Beobachten von bereits vorhandener Funkaktivität feststellen lassen oder für andere Zwecke ist die Steuereinheit CE ausgebildet, die Sendeeinheit TE so anzusteuern, dass diese Testdatenpakete zu Zeitpunkten sendet, die durch die Steuereinheit CE abhängig von einer Auslastung des Funkkanals, einer zusätzlichen Auslastung des Funkkanals durch Testdatenpakete und/oder einer Störung des Funkkanals durch die Testdatenpakete bestimmt werden. Weder die Sendeeinheit TE noch die zugehörige Konfiguration der Steuereinheit CE sind jedoch essentiell für die vorliegende Erfindung.

Die Steuereinheit CE und die Empfangseinheit TE des Ausführungsbeispiels sind in einem robusten Gehäuse RG integriert. Das robuste Gehäuse RG ist wetterfest, vibrationsfest und/oder schlagfest. Zusätzlich oder alternativ kann Vorrichtung SON temperaturbeständig ausgebildet sein. Das robuste Gehäuse RG ist jedoch nicht essentiell für die vorliegende Erfindung.

Die dargestellte Vorrichtung SON umfasst weiterhin mindestens eine auch in dem robusten Gehäuse RG integrierte Funkantenne FA und mindestens einen Anschluss AA an dem Gehäuse RG zum Anschluss einer externen Funkantenne. Diese sind jedoch nicht essentiell für die vorliegende Erfindung.

Die dargestellte Vorrichtung SON umfasst weiterhin eine Einheit SP zur Erfassung von Messdaten zur Nutzung des Frequenzspektrums. Dabei werden die Messdaten gespeichert.

Da Störungen auch von anderen Funksystemen verursacht werden, ist eine Analyse der Messdaten zur Nutzung des Frequenzspektrums sinnvoll, da so jegliche Art von Funkaktivität im betreffenden Frequenzbereich festgestellt werden kann.

Die Messdaten können mit unterschiedlichen Zeitauflösungen und/oder mit unterschiedlichen Frequenzauflösungen und/oder mit unterschiedlichen Aufzeichnungsverzögerungen und/oder mit Messprinzipien erfasst werden. Daher ist die Steuereinheit CE des dargestellten Ausführungsbeispiels ausgebildet, die Messdatenerfassung so zu steuern, dass die Messdaten miteinander und/oder mit den Steuerdaten synchronisiert sind. Dies ist jedoch nicht essentiell für die vorliegende Erfindung.

Die Steuereinheit CE des dargestellten Ausführungsbeispiels ist weiterhin ausgebildet, Artefakte in den Messdaten zu maskieren, wobei die Artefakte durch die Vorrichtung und/oder durch eine oder mehrere weitere, in der Steuervorrichtung bezüglich ihrer Artefakte spezifizierte Vorrichtungen erzeugte Artefakte sind.

Die Vorrichtung SON kann weiterhin eine Echtzeituhr; ein satellitengestütztes Positionsbestimmungssystem; eine Sekundärbatterie; einen Stromanschluss und/oder einen externen Speicheranschluss zum Anschließen einer externen Speichereinheit umfassen.

Die vorliegende Erfindung ist eine im Folgenden auch "autarke WLAN-Messsonde" genannte Vorrichtung, also ein Messgerät, das WLAN-Funkverkehr auf Ebene der Luftschnittstelle in mindestens einem Funkkanal mittels mindestens einer entsprechenden Empfangseinheit empfangen kann. Daten aus empfangenen Datenpaketen werden dabei auf einem Speichermedium innerhalb der autarken WLAN-Messsonde gespeichert. Die Daten können dann zu einem späteren Zeitpunkt ausgelesen und beispielsweise in einem separaten System ausgewertet werden. Empfang und Speicherung werden dabei durch eine Steuereinheit der autarken WLAN-Messsonde gesteuert. Die autarke WLAN-Messsonde kann zudem weitere Messdaten mit Hilfe eines Spektrumanalysators erheben.

Ein besonderes Merkmal des weiteren Ausführungsbeispiels ist also die autarke Arbeitsweise ohne Verbindung zu einem externen Speicher-, Überwachungs- oder Steuerungssystem. Vorzugs- jedoch nicht notwendigerweise ist die autarke WLAN-Messsonde zumindest für Überbrückungszeiträume auch energieautark, beispielsweise durch eine umfasste Batterie.

Die autarke WLAN-Messsonde ist konfiguriert, Messdaten bereits bei der Aufzeichnung zu filtern und die gefilterten Daten verlustfrei zu komprimieren. Die Filterung erfolgt dabei in einer Weise, die eine nachträgliche Auswertung -unabhängig von den für die nachfolgende Auswertung relevanten Details- nicht beeinträchtigt. Beispielsweise werden lediglich Steuerdaten empfangener Datenpakete Delta-kodiert gespeichert. Dabei werden von einer Steuereinheit der autarken WLAN-Messsonde Steuerdaten eines nachfolgend empfangenen Datenpakets mit Steuerdaten eines vorangehend empfangen Datenpakets verglichen und der nicht korrelierte Teil der Steuerdaten eines nachfolgend empfangenen Datenpakets bestimmt. Der nicht korrelierte Teil wird anschließend gespeichert.

Die Steuereinheit der autarken WLAN-Messsonde kann weiterhin konfiguriert sein, automatisch und/oder situationsabhängig Anpassung von Messparametern vorzunehmen. Zum Beispiel kann die autarke WLAN-Messsonde konfiguriert sein, zu beobachtende Funkkanäle automatisch, und optional dynamisch, auszuwählen. Dies kann auch eine Auswahl eines geeigneten Kanalsprungmusters umfassen, wenn eine Anzahl von der autarken WLAN-Messsonde umfassten Empfangseinheiten kleiner als eine Anzahl zu beobachtender Kanäle ist.

Die Steuereinheit der autarken WLAN-Messsonde kann zudem für aktive Tests konfiguriert sein. Dann ist die Steuereinheit der autarken WLAN-Messsonde konfiguriert, Zeitpunkte für die aktiven Tests automatisch zu ermitteln und die aktiven Tests so zu gestalten und/oder durchzuführen, dass das beobachtete WLAN-System durch die Tests nicht übermäßig belastet oder gestört wird.

Zur Sicherstellung der die Kohärenz von Messdaten aus unterschiedlichen, sich gegenseitig beeinflussenden Quellen kann die Steuereinheit der autarken WLAN-Messsonde weiterhin konfiguriert sein, Messdaten aus verschiedenen Quellen mit unterschiedlicher Zeit- und Frequenzauflösung sowie unterschiedlichen Aufzeichnungsverzögerungen und Messprinzipien zu synchronisieren und/oder Artefakte, die durch die autarke WLAN-Messsonde selbst verursacht werden, zu erkennen und zu maskieren.

Im Folgenden wird eine spezielle, beispielhafte Ausführungsform der autarken WLAN-Messsonde beschrieben.

Gemäß der Erfindung verfügt die autarke WLAN-Messsonde über Messmöglichkeiten, die den Empfang und die Aufzeichnung von WLAN-Datenverkehr auf Ebene der Luftschnittstelle ermöglichen. Auf diese Weise kann jede am Standort der autarken WLAN-Messsonde empfangbare WLAN-Kommunikation analysiert werden. Die Empfangseinheiten können über Module realisiert werden, so dass die autarke WLAN-Messsonde bei Erscheinung neuer WLAN-Standards umgerüstet werden kann. Bei Einsatz von mehr als einem Empfangsmodul kann der Datenverkehr entsprechend auf mehreren WLAN-Funkkanälen gleichzeitig vollständig erfasst werden. Falls mehr Kanäle untersucht werden müssen, als Funkmodule vorhanden sind, kann die autarke WLAN-Messsonde eigenständig periodisch den gemessenen Funkkanal wechseln. Die Ablaufsteuerung berücksichtigt dabei die Anzahl der Funkmodule, deren jeweilige technische Möglichkeiten und die aktuelle Situation am Messstandort (zum Beispiel seltenere Messung auf Kanälen, die offensichtlich ungenutzt sind). Die für die Messung notwendigen Antennen können im Gehäuse der autarken WLAN-Messsonde integriert werden. Alternativ können externe Antennen über entsprechende Anschlüsse verwendet werden.

Die autarke WLAN-Messsonde kann parallel zur Erfassung von WLAN-Datenverkehr erfindungsgemäß auch Messdaten zur Spektrumsnutzung aufnehmen, wodurch Funksysteme aufgespürt werden können, welche nicht nach dem WLAN-Standard arbeiten sowie Störungen, die nicht von einem Kommunikationssystem ausgehen (zum Beispiel Mikrowellenherde).

Die spezielle Ausführungsform der autarken WLAN-Messsonde arbeitet abgesehen von der Stromversorgung autark, d. h. die Messung erfolgt automatisch und ohne einen Benutzereingriff. Eine Verbindung zum Beispiel zu einem Steuerungssystem ist während der Messung nicht nötig. Im Vorfeld kann ein Fokus für die Messung festgelegt werden. Eine Nachjustierung von Messparametern während der Messung ist nicht möglich. Daher muss die die spezielle Ausführungsform der autarken WLAN-Messsonde hier ggf. selbstständig Anpassungen vornehmen. Die autarke Funktion erlaubt eine große Freiheit bei der Wahl des Installationsortes, so dass die autarke WLAN-Messsonde nach Möglichkeit immer an dem Ort aufgestellt werden kann, an dem die jeweiligen Probleme auftreten. Auch ist der Einsatz an Orten möglich, an denen die dauerhafte Anwesenheit eines Bedieners problematisch ist sowie auf beweglichen Maschinen oder Fahrzeugen. Dadurch, dass kein Bediener benötigt wird, können gegebenenfalls Personalkosten eingespart werden.

Die autarke WLAN-Messsonde ist in allen ihren Ausführungsformen unabhängig von vorhandener Netzwerkinstallation und stellt ein technisch vollständig von der vorhandenen Netzwerk-Infrastruktur losgelöstes System dar. Hierdurch wird es ermöglicht, netzwerksystemimmanente Fehler zu diagnostizieren.

Die autarke WLAN-Messsonde ist vorteilhafter- aber nicht notwendigerweise robust, d. h. wetterfest, vibrationsfest und temperaturbeständig (im Industrieumfeld üblichen Temperaturbereich). Sofern die WLAN-Messsonde nicht vollständig energieautark ist, kann eine Stromversorgung flexibel ausgelegt sein, so dass die autarke WLAN-Messsonde am Stromnetz oder auch an Bordnetzen betrieben werden kann. Ist die autarke WLAN-Messsonde für Überbrückungszeiträume energieautark, so ist sie unempfindlich gegenüber spontanem Verlust der Stromversorgung. Kürzere Unterbrechungen werden dann durch die Batterie abgefangen. Dann kann die Messsonde beziehungsweise die umfasste Steuereinheit zusätzlich konfiguriert sein, die autarke WLAN-Messsonde bei längeren Unterbrechungen automatisch und kontrolliert herunterzufahren, so dass Defekte am Messdaten-Speicher verhindert werden und die sichere Dokumentation bereits gemessener Messzeiträume gewährleistet bleibt.

Die autarke WLAN-Messsonde verfügt über einen internen Speicher, der groß genug ist, um Messdaten für längere Zeiträume aufzunehmen (zum Beispiel mehrere Wochen). Sollte der Speicher der autarken WLAN-Messsonde erschöpft sein, kann die autarke WLAN-Messsonde je nach Konfiguration die Aufzeichnung stoppen oder die jeweils ältesten Messdaten überschrieben, so dass ein Ringpuffer ähnlich dem in einem Stimmrekorder an Bord von Flugzeugen entsteht.

Das Prinzip der WLAN -Messsonde erlaubt den Einsatz in Datenschutz-sensiblen Bereichen. Die Messdaten gelangen während der Messung nicht außerhalb der autarken WLAN-Messsonde. Sie können bereits während der Aufzeichnung verschlüsselt werden, so dass auch bei Verlust der autarken WLAN-Messsonde während oder nach der Messung keine Daten in fremde Hände gelangen können. Auch können Daten, insbesondere aber nicht nur Nutzdaten der Datenpaket, bereits bei der Aufzeichnung pseudonymisiert, anonymisiert oder partiell entfernt ("geschwärzt") werden.

Vorteilhafter- jedoch nicht notwendigerweise verfügt die autarke WLAN-Messsonde über eine Echtzeituhr und über einen Empfänger für Satellitennavigationssysteme (GPS, GALILEO, GLONASS etc.). erlaubt bei mobilen Außenanwendungen eine Georeferenzierung der Messdaten und zusätzlich einen netzwerkunabhängigen Zeitabgleich.

Die autarke WLAN-Messsonde ist besonders einfach in der Handhabung und erfordert in der Installation kein Fachwissen. Die autarke WLAN-Messsonde benötigt, je nach Ausführungsform, lediglich eine Stromversorgung. Eine Einbindung in vorhandene Netzwerke ist nicht nötig. Für die Inbetriebnahme der extern mit Energie versorgten autarken WLAN-Messsonde sind keine Taster oder sonstige Bedienelemente notwendig und daher vorzugsweise auch nicht vorhanden. Um die Messung zu beginnen, genügt es, das Gerät mit der Stromversorgung zu verbinden und um die Messung zu beenden, genügt es, das Gerät von der Stromversorgung zu trennen. Für die In- und Außerbetriebnahme einer dauerhaft energieautarken WLAN-Messsonde reicht ein einziges Bedienelement. Die autarke WLAN-Messsonde kann vorteilhafter- jedoch nicht notwendigerweise über eine Statusanzeige verfügen, zum Beispiel eine mehrfarbige LED oder mehrere LED, über die auch unerfahrene Anwender einfach erkennen können, ob die Aufzeichnung fehlerfrei arbeitet und ob ggf. der interne Speicher erschöpft ist.

Diese Eigenschaften erlauben besondere Einsatzszenarien. So kann die autarke WLAN-Messsonde zum Beispiel als Paket versandt und am Einsatzort von einem unerfahrenen Benutzer in Betrieb genommen werden. Nach Ende der Messung kann die autarke WLAN-Messsonde ebenfalls als Paket zurückgesandt werden. Anschließend kann ein Experte die Messdaten aus der autarken WLAN-Messsonde auslesen und auswerten.

Optional umfasst die autarke WLAN-Messsonde einen Anschluss für einen externen Speichereinheit, beispielsweise einen USB-Anschluss oder eine Port zum Anschließen einer kabelgebundenen Netzwerkverbindung zu einem Massenspeicher, oder eine Aufnahme zum Aufnehmen einer Speicherkarte, beispielsweise eine SD-Card oder microSD-Card. Dann kann der Anwender vor Ort ein externes Speichermodul an die autarke WLAN-Messsonde anschließen, auf welches dann automatisch alle bis dahin angefallenen Messdaten transferiert und anschließend gegebenenfalls aus dem Speicher der autarken WLAN-Messsonde gelöscht werden.

Die autarke WLAN-Messsonde kann optional mit einer Wartungs-Schnittstelle ausgestattet sein (zum Beispiel über Mobilfunk, anderes Funksystem, WLAN), die eine Kontrolle der Aufzeichnung während der Messung erlaubt.

Neben der rein passiven Messung kann die autarke WLAN-Messsonde auch konfiguriert werden, aktive Tests durchzuführen, um die Nutzbarkeit und Funktionsfähigkeit von WLAN-Netzen zu beurteilen. Hierzu kann sich die autarke WLAN-Messsonde regelmäßig, zum Beispiel periodisch, in vorhandene WLAN-Netze einbuchen, die Erreichbarkeit bestimmter Gegenstellen prüfen und die Qualität von Diensten testen. Die Ergebnisse werden in der autarken WLAN-Messsonde protokolliert und erlauben so eine spätere Beurteilung im Zeitverlauf.

Durch die aktiven Tests kann der Zustand des Netzes auch in Situationen beurteilt werden, in denen dies nicht durch die Beobachtung anderer Geräte möglich ist, zum Beispiel bei Abwesenheit anderer Geräte.

## Patentansprüche

1. Vorrichtung (SON) zur Erzeugung einer Datenbasis, die für eine Identifikation von Problemen in einem drahtlosen Netzwerk geeignet ist, wobei die Vorrichtung (SON) eine autarke WLAN-Messsonde ist und mindestens eine Empfangseinheit (EE) zum Empfang von WLAN-Funkverkehr nämlich Datenpaketen über mindestens einen WLAN-Funkkanal des drahtlosen Netzwerks und eine interne Speichereinheit (SE) zur Speicherung von Daten aus empfangenen Datenpaketen umfasst, wobei die Vorrichtung eine Steuereinheit (CE) umfasst, die ausgebildet ist, zumindest in den empfangen Datenpaketen enthaltene Steuerdaten in der internen Speichereinheit (SE) zu speichern, wobei die Steuereinheit (CE) ausgebildet ist, autark, also automatisiert und dynamisch-adaptiv, von der Empfangseinheit (EE) empfangene Datenpakete zur Speicherung in der Datenbasis auszuwählen, **dadurch gekennzeichnet, dass** die interne Speichereinheit (SE) groß genug ist, um Messdaten für einen Zeitraum von mehreren Tagen aufzunehmen, wobei die Vorrichtung parallel zur Erfassung von WLAN-Datenverkehr weiterhin eine Einheit (SP) zur Erfassung von Messdaten zur Nutzung des Frequenzspektrums umfasst, wobei die Messdaten in der internen Speichereinheit (SE) gespeichert werden, wobei durch Aufnehmen von Messdaten zur Spektrumsnutzung Funksysteme aufgespürt werden können, welche nicht nach dem WLAN-Standard arbeiten sowie Störungen, die nicht von einem Kommunikationssystem ausgehen.

2. Vorrichtung (SON) nach Anspruch 1, wobei das drahtlose Netzwerk mindestens zwei Funkkanäle umfasst und die Empfangseinheit (EE) ausgebildet ist, in zeitlicher Folge Datenpakete über die mindestens zwei Funkkanäle zu empfangen, und wobei die Steuereinheit (CE) ausgebildet ist, die Empfangseinheit (EE) dynamisch zu einem Kanalwechsel anzusteuern.

3. Vorrichtung nach Anspruch 1, wobei von Steuerdaten eines nachfolgend empfangenen Datenpakets lediglich ein mit Steuerdaten eines vorangehend empfangen Datenpakets nicht korrelierter Teil gespeichert wird.

4. Vorrichtung nach einem der vorangehenden Ansprüche, wobei die Vorrichtung weiterhin eine Sendeeinheit (TE) umfasst und die Steuereinheit (CE) ausgebildet ist, Zeitpunkte abhängig von
- einer Auslastung des Funkkanals,
- einer zusätzlichen Auslastung des Funkkanals durch Testdatenpakete und/oder
- einer Störung des Funkkanals durch Testdatenpakete
zu bestimmen, und wobei die Sendeeinheit (TE) ausgebildet ist, Testdatenpakete zu den Zeitpunkten über den einen Funkkanal des drahtlosen Netzwerks zu senden.

5. Vorrichtung nach einem der vorangehenden Ansprüche, wobei die Steuereinheit (CE) und die Empfangseinheit (EE) in einem Gehäuse (RG) integriert sind und die Vorrichtung (SON) weiterhin mindestens eine auch in dem Gehäuse integrierte Funkantenne (FA) und/oder mindestens einen Anschluss (AA) an dem Gehäuse zum Anschluss einer externen Funkantenne umfasst.

6. Vorrichtung nach einem der vorangehenden Ansprüche, wobei die Messdaten mit unterschiedlichen Zeitauflösungen und/oder mit unterschiedlichen Frequenzauflösungen und/oder mit unterschiedlichen Aufzeichnungsverzögerungen und/oder Messprinzipien erfasst werden und die Steuereinheit (CE) ausgebildet ist, die Messdatenerfassung so zu steuern, dass die Messdaten miteinander und/oder mit den Steuerdaten synchronisiert sind.

7. Vorrichtung nach Anspruch 6, wobei die Steuereinheit (CE) ausgebildet ist, durch die Vorrichtung (SON) erzeugte Artefakte in den Messdaten zu maskieren.

8. Vorrichtung nach einem der vorangehenden Ansprüche, wobei die Vorrichtung weiterhin mindestens eine der folgenden Komponenten umfasst:
- eine Echtzeituhr;
- ein satellitengestütztes Positionsbestimmungssystem;
- eine Sekundärbatterie;
- einen Stromanschluss und/oder
- einen externen Speicheranschluss zum Anschließen einer externen Speichereinheit.

## Claims

1. Device (SON) for generating a database that is suitable for identifying problems in a wireless network, wherein the device (SON) is a self-sufficient WLAN measurement probe and comprises at least one receiver unit (EE) for receiving WLAN radio traffic, namely data packets, via at least one WLAN radio channel of the wireless network and an internal memory unit (SE) for storing data from received data packets, wherein the device comprises a control unit (CE) which is adapted to store at least control data contained in the received data packets in the internal memory unit (SE), wherein the control unit (CE) is adapted to be self-sufficient, i.e. automated and dynamically-adaptively, to select data packets received by the receiver unit (EE) for storage in the database, **characterized in that** the internal memory unit (SE) is large enough to hold measurement data for a period of several days, wherein the device further comprises, in parallel with the acquisition of WLAN data traffic, a unit (SP) for acquiring measurement data for using the frequency spectrum wherein the measurement data is stored in the internal memory unit (SE), wherein by acquiring measurement data for spectrum utilization radio systems can be detected which do not operate according to the WLAN standard as well as disturbances which do not originate from a communication system.

2. Device (SON) according to claim 1, wherein the wireless network comprises at least two radio channels and the receiver unit (EE) is adapted to receive data packets in time sequence via the at least two radio channels, and wherein the control unit (CE) is designed to control the receiver unit (EE) dynamically for a channel change.

3. Device according to claim 1, wherein of control data of a subsequently received data packet only a part not correlated with control data of a previously received data packet is stored.

4. Device according to any one of the preceding claims, wherein the device further comprises a transmitting unit (TE), and the control unit (CE) is adapted to determine points in time depending on
- a utilization of the radio channel,
- an additional utilization of the radio channel by test data packets, and/or
- a disturbance of the radio channel by test data packets,
and wherein the transmitting unit (TE) is adapted to transmit test data packets at the points in time via the one radio channel of the wireless network.

5. Device according to any one of the preceding claims, wherein the control unit (CE) and the receiving unit (EE) are integrated in a housing (RG) and the device (SON) further comprises at least one radio antenna (FA) also integrated in the housing and/or at least one connector (AA) on the housing for connecting an external radio antenna.

6. Device according to any one of the preceding claims, wherein the measurement data are acquired with different time resolutions and/or with different frequency resolutions and/or with different recording delays and/or measurement principles, and the control unit (CE) is adapted to control the measurement data acquisition such that the measurement data are synchronized with each other and/or with the control data.

7. Device according to claim 6, wherein the control unit (CE) is adapted to mask artifacts in the measurement data generated by the device (SON).

8. Device according to any one of the preceding claims, wherein the device further comprises at least one of the components below:
- a real-time clock;
- a satellite-based positioning system;
- a secondary battery;
- a power connector; and/or
- an external memory port for connecting an external memory unit.

## Revendications

1. Dispositif (SON) de génération d'une base de données, qui est apte à l'identification de problèmes dans un réseau sans fil, le dispositif (SON) étant une sonde de mesure WLAN autarcique et comprenant au moins une unité de réception (EE) destinée à recevoir des radiocommunications WLAN, notamment des paquets de données, par le biais d'au moins un canal de radiodiffusion WLAN du réseau sans fil et une unité de mémoire (SE) interne destinée à enregistrer des données provenant de paquets de données reçus, le dispositif comprenant une unité de commande (CE), qui est conçue pour enregistrer des données de commande contenues au moins dans les paquets de données reçus dans l'unité de mémoire (SE) interne, l'unité de commande (CE) étant conçue pour sélectionner de manière autarcique, donc automatisée et dynamiquement adaptative, des paquets de données reçus par l'unité de réception (EE) pour l'enregistrement dans la base de données, **caractérisé en ce que** l'unité de mémoire (SE) interne est de taille suffisante pour enregistrer des données de mesure pendant une période de plusieurs jours, le dispositif comprenant en outre, parallèlement à l'acquisition de radiocommunications WLAN, une unité (SP) destinée à acquérir des données de mesure concernant l'utilisation du spectre de fréquences, les données de mesure étant enregistrées dans l'unité de mémoire (SE) interne, des systèmes de radiocommunication, qui ne fonctionnent pas selon la norme WLAN, ainsi que des perturbations, qui n'émanent pas d'un système de communication, pouvant être dépistés par l'enregistrement de données de mesure concernant l'utilisation du spectre.

2. Dispositif (SON) selon la revendication 1, dans lequel le réseau sans fil comprend au moins deux canaux de radiodiffusion et l'unité de réception (EE) est conçue pour recevoir successivement des paquets de données par le biais des au moins deux canaux de radiodiffusion, et dans lequel l'unité de commande (CE) est conçue pour commander l'unité de réception (EE) de manière dynamique afin qu'elle change de canal.

3. Dispositif selon la revendication 1, dans lequel seulement une partie de données de commande d'un paquet de données reçu subséquemment non corrélée avec des données de commande d'un paquet de données reçu précédemment est enregistrée.

4. Dispositif selon l'une des revendications précédentes, dans lequel le dispositif comprend en outre une unité d'émission (TE) et l'unité de commande (CE) est conçue pour déterminer des moments en fonction de
- une charge du canal de radiodiffusion,
- une charge supplémentaire du canal de radiodiffusion par des paquets de données de test et/ou
- une perturbation du canal de radiodiffusion par des paquets de données de test et dans lequel l'unité d'émission (TE) est conçue pour envoyer des paquets de données de test auxdits moments par le biais dudit canal de radiodiffusion du réseau sans fil.

5. Dispositif selon l'une des revendications précédentes, dans lequel l'unité de commande (CE) et l'unité de réception (EE) sont intégrées dans un boîtier (RG) et le dispositif (SON) comprend en outre au moins une antenne radioélectrique (FA) également intégrée dans le boîtier et/ou au moins une connexion (AA) sur le boîtier pour la connexion d'une antenne radioélectrique externe.

6. Dispositif selon l'une des revendications précédentes, dans lequel les données de mesure sont acquises avec différentes résolutions temporelles et/ou avec différentes résolutions en fréquence et/ou avec différents délais d'enregistrement et/ou principes de mesure et l'unité de commande (CE) est conçue pour commander l'acquisition de données de mesure de telle sorte que les données de mesure sont synchronisées entre elles et/ou avec les données de commande.

7. Dispositif selon la revendication 6, dans lequel l'unité de commande (CE) est conçue pour masquer, dans les données de mesure, des artefacts générés par le dispositif (SON).

8. Dispositif selon l'une des revendications précédentes, dans lequel le dispositif comprend en outre au moins un des composants suivants :
- une horloge en temps réel ;
- un système de localisation assisté par satellite ;
- une batterie d'accumulateurs ;
- une connexion électrique, et/ou
- une connexion de mémoire externe pour connecter une unité de mémoire externe.
